# EUROPÄISCHE PATENTSCHRIFT

(11) **EP 2 177 810 B1**
(45) Veröffentlichungstag und Bekanntmachung des Hinweises auf die Patenterteilung: **16.02.2011**
(21) Anmeldenummer: 08017975.7
(22) Anmeldetag: 14.10.2008
(51) Int. Cl.: F16L 55/134

(54) **Stopfen zum dichten Verschliessen eines Rohres**
Plug for sealing a pipe
Bouchon destiné à la fermeture étanche d'un tuyau

(43) Veröffentlichungstag der Anmeldung: 21.04.2010
(73) Patentinhaber: Balcke-Dürr GmbH, 40882 Ratingen (DE)
(72) Erfinder: Grobelny, Hans-Günter, Dipl.-Ing., 44623 Herne (DE)
(74) Vertreter: Lang, Friedrich

(56) Entgegenhaltungen:
- EP-A1- 0 218 049
- EP-A1- 0 292 104
- GB-A- 1 380 964
- US-A- 2 130 030
- US-A- 3 726 319

## Beschreibung

Die Erfindung betrifft einen Stopfen zum dichten Verschließen eines Rohres, der einen zylinderförmigen Grundkörper umfasst.

Es ist bekannt, ein Rohr mit einem Stopfen zu verschließen, der ein elastisches Material aufweist und dessen Außenradius geringförmig größer ist als der Innenradius des Rohres, so dass der Stopfen mittels einer Presspassung in dem Rohr befestigt werden kann. Dies führt zu einem dichten Verschließen des Rohres, ist jedoch nur bei geringen Drücken in dem Rohr geeignet. Ferner ist es bekannt, den Stopfen über Innen- oder Außengewinde mit dem Rohr zu verschrauben. Zum dichten Verschließen ist dann grundsätzlich zumindest noch ein Dichtungselement wie z.B. ein O-Ring vorgesehen. Ferner kann ein geeigneter Stopfen mit dem Rohr dichtend verschweißt werden.

Bei einem Wärmetauscher für industrielle Zwecke, beispielsweise zum Kühlen oder zum Vorwärmen in einem Kraftwerk, werden Rohre mit bis zu 13,5 m Länge verwendet. Diese Rohre müssen teilweise nach ihrer Installation verschlossen werden. Je nach Anwendung müssen die Rohre an ihren axialen Enden oder auch beabstandet von ihren axialen Enden verschlossen werden. Ferner können in derartigen Rohren sehr hohe Drücke vorherrschen, so dass es erforderlich sein kann, Wandungen der Rohre vorzugsweise möglichst unversehrt zu lassen.
Aus der US 2,130,030 A ist ein Stopfen zum Verschließen eines Rohres bzw. einer Rohrleitung bekannt. Dieser Stopfen umfasst einen Grundkörper und eine um den Grundkörper herum angeordnete, verformbare Hülse, die grundkörperseitig mit einem Innendruck beaufschlagbar ist und sich infolge elastisch an die Rohrwandung anlegt, wodurch ein Verschluss des betreffenden Rohres erreicht wird. Nachteilig hieran ist unter anderem, dass zum dichten Verschließen des Rohres ein beständiger Innendruck auf die elastische Hülse aufgebracht werden muss.

Es ist daher die Aufgabe der vorliegenden Erfindung, einen Stopfen und ein Verfahren zum dichten Verschließen eines Rohres anzugeben, der bzw. das auf einfache Weise einen dichten Verschluss des betreffenden Rohres ermöglicht, insbesondere so, dass der Verschluss auch bei hohen Drücken im Rohr dicht ist.
Diese Aufgabe wird gelöst durch einen Stopfen mit den Merkmalen des Anspruchs 1 und durch ein Verfahren zum dichten Verschließen eines Rohres mit den Merkmalen des nebengeordneten Anspruchs. Vorteilhafte Weiterbildungen sind Gegenstand der abhängigen Ansprüche.

Der Stopfen umfasst eine verformbare Hülse und einen zylinderförmigen Grundkörper mit einem Anschluss für eine Druckleitung. Die Hülse ist so mit dem zylinderförmigen Grundkörper gekoppelt, dass die Hülse und der zylinderförmige Grundkörper einen nach außen dichten Druckbereich bilden, der mit dem Anschluss kommuniziert.

Erfindungsgemäß ist die Hülse mit dem zylinderförmigen Grundkörper verschweißt. Dies ermöglich einfach das dichte Koppeln des zylinderförmigen Grundkörpers mit der Hülse.

Zum dichten Verschließen des Rohres wird der Stopfen in das Rohr eingeführt und der Anschluss des zylinderförmigen Grundkörpers und damit der Druckbereich des Stopfens werden derart mit Druck beaufschlagt, dass sich die Hülse in dem Druckbereich ausweitet und so das Rohr dicht verschließt. Dabei wird der Druck so hoch gewählt, dass sich die Hülse über die Fließgrenze des verwendeten Materials hinaus verformt, so dass die Hülse nach deren Verformen auch ohne Druck dauerhaft verformt bleibt. Der dafür nötige Druck kann abhängig von dem verwendeten Material empirisch ermittelt werden, beispielsweise an einem geeigneten Prüfstand.

Der Stopfen kann in vorteilhafter Weise einfach über eine entsprechend lange Druckleitung beliebig weit in das Rohr eingeführt werden und durch die Druckbeaufschlagung an einer beliebigen Stelle des Rohres dichtend festgelegt werden. Der Stopfen erübrigt darüber hinaus eine Bearbeitung des Rohres, da der Stopfen aufgrund der entstehenden Presspassung das Rohr abdichtet. Ferner kann der Druck, mit dem der Druckbereich beaufschlagt wird, derart hoch gewählt werden, dass der Stopfen auch bei extremen Drücken in dem Rohr das Rohr dicht verschließt. Beispielsweise kann der Druck, mit dem der Druckbereich beaufschlagt wird, so hoch gewählt werden, dass die sich ausweitende Hülse das Rohr verformt, wodurch zusätzlich zu der Presspassung eine Formpassung zwischen Hülse und Rohr hergestellt wird.

In einer vorteilhaften Ausgestaltung kommuniziert der Druckbereich über eine Druckzuführung im zylinderförmigen Grundkörper mit dem Anschluss. Die Druckzuführung umfasst vorzugsweise zwei Bohrungen, von denen sich eine in axialer Richtung und eine in radialer Richtung des zylinderförmigen Grundkörpers erstreckt. Dabei mündet die Bohrung in radialer Richtung an einem ihrer axialen Enden in den Druckbereich bzw. in das freie Arbeitsvolumen und an ihrem anderen axialen Ende in die axiale Bohrung. Die axiale Bohrung hingegen mündet an ihrem von der radialen Bohrung abgewandten Ende vorzugsweise in den Anschluss. Dies ermöglicht besonders einfach die Kommunikation zwischen dem Druckbereich und/oder dem freien Arbeitsvolumen und dem Anschluss.

In einer weiteren vorteilhaften Ausgestaltung ist in der Druckzuführung ein Ventil angeordnet. Das Ventil ist vorzugsweise ein Rückschlagventil, durch das ein Druckabbau in dem Druckbereich vermieden werden kann, wenn der Druck über die Druckleitung verringert wird und/oder die Druckleitung von dem Anschluss entfernt wird. Alternativ oder zusätzlich kann in der Druckzuführung ein Überdruckventil angeordnet sein, das das Abbauen von Überdruck in dem Druckbereich ermöglicht.

In einer weiteren vorteilhaften Ausgestaltung ist der Außenradius des zylinderförmigen Grundkörpers in dem Druckbereich zumindest teilweise kleiner als der Innenradius der Hülse. Auf diese Weise ist in dem Druckbereich ein freies Arbeitsvolumen gebildet. Dies kann dazu beitragen, dass sich die Hülse vorzugsweise im Bereich des freien Arbeitsvolumens nach außen wölbt.

In einer weiteren vorteilhaften Ausgestaltung ist die Hülse an ihren axialen Enden mit dem zylinderförmigen Grundkörper gekoppelt. Dies kann dazu beitragen, die Hülse besonders einfach mit dem zylinderförmigen Grundkörper zu koppeln.

In einer weiteren vorteilhaften Ausgestaltung weist der zylinderförmige Grundkörper einen ersten axialen Abschnitt auf, der in radialer Richtung von der Hülse umgeben ist. Ferner weist der zylinderförmige Grundkörper einen zweiten axialen Abschnitt auf, der den Anschluss umfasst und der in axialer Richtung außerhalb der Hülse liegt. Dies ermöglicht, in dem ersten axialen Abschnitt eine oder mehrere Vorrichtungen anzubringen, die mit der Umgebung des Stopfens kommunizieren können. Beispielsweise kann in dem ersten axialen Abschnitt das Ventil, insbesondere ein Überdruckventil, angeordnet sein, das bei zu hohem Druck einen Druckabbau außerhalb der Hülse ermöglicht.

In einer vorteilhaften Ausgestaltung ist eine Wandstärke der Hülse deutlich kleiner als der Innenradius der Hülse. Dies trägt dazu bei, dass sich die Hülse bei einem vorgegebenen Druck ausreichend nach außen wölbt, ohne dass die Hülse und/oder der zylinderförmige Grundkörper aufgrund des Druckes beschädigt werden.

Die Erfindung wird nachfolgend anhand von zwei in den Zeichnungen dargestellten Ausführungsbeispielen näher erläutert.

Es zeigen schematisch:
- Fig. 1: einen Stopfen im unbelasteten Zustand,
- Fig. 2: den Stopfen gemäß Figur 1 in belastetem Zustand angeordnet in einem Rohr.

Elemente gleicher Konstruktion oder Funktion sind figurenübergreifend mit den gleichen Bezugszeichen gekennzeichnet.

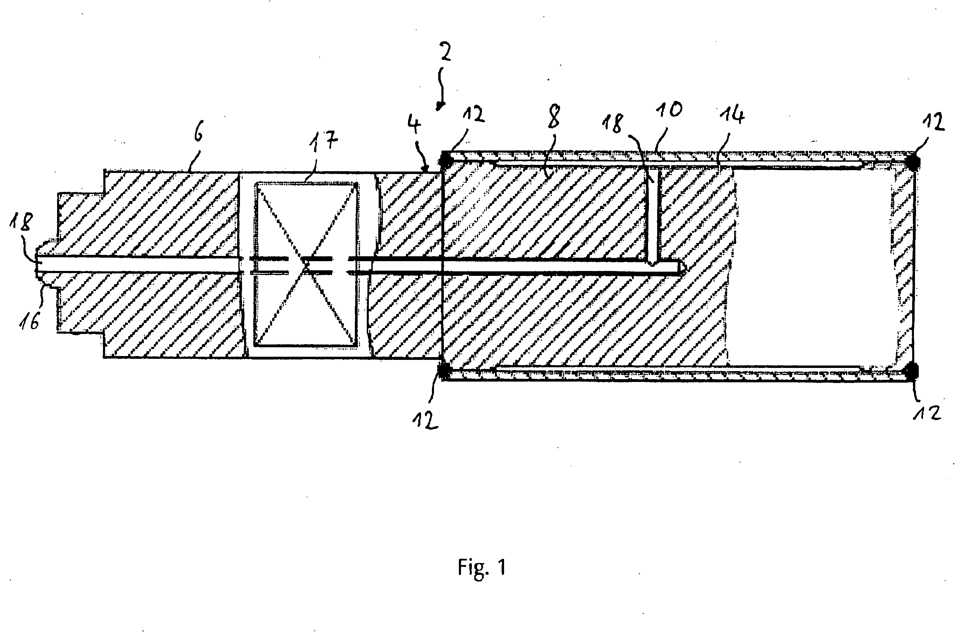

Fig. 1 zeigt einen Stopfen 2, der einen im Wesentlichen zylinderförmigen Grundkörper 4 umfasst. Der zylinderförmige Grundkörper 4 kann einen ersten und einen zweiten axialen Abschnitt 6, 8 umfassen. Alternativ dazu kann der zylinderförmige Grundkörper 4 auch lediglich einen axialen Abschnitt oder mehr axiale Abschnitte umfassen. Der zylinderförmige Grundkörper 4 ist im Bereich des zweiten axialen Abschnitts 8 in radialer Richtung von einer Hülse 10 umgeben. Die Hülse 10 liegt vorzugsweise zumindest in ihren axialen Endbereichen an dem zweiten axialen Abschnitt 8 an. In diesen axialen Endbereichen ist die Hülse 10 dicht mit dem zylinderförmigen Grund-körper 4 verschweißt, beispielsweise über zwei kreisförmig um den zylinderförmigen Grundkörper 4 verlaufende Schweißnähte 12. Zusätzlich können zwischen der Hülse 10 und dem zweiten axialen Abschnitt 8 Dichtungselemente vorgesehen sein.

In radialer Richtung ist zwischen dem zweiten Abschnitt 8 und der Hülse 10 ein Druckbereich 14 gebildet. Der Druckbereich 14 kommuniziert über eine Druckzuführung 18 mit einem Anschluss 16, der vorzugsweise an einem axialen Endbereich des ersten axialen Abschnitts 6 ausgebildet ist, der von der Hülse 10 abgewandt ist. Die Druckzuführung 18 umfasst beispielsweise eine, vorzugsweise zumindest zwei Bohrungen, insbesondere eine Längsbohrung in axialer Richtung, die einerseits in den Anschluss 16 mündet und andererseits in eine radiale Bohrung mündet, wobei die radiale Bohrung an ihrem anderen axialen Ende in den Druckbereich 14 mündet.

In der Druckzuführung 18 ist vorzugsweise zumindest ein Ventil 17 angeordnet. Das Ventil 17 kann beispielsweise als Rückschlagventil ausgebildet sein, das einen Druckabbau in dem Druckbereich verhindert, wenn der Druck über die Druckleitung verringert wird und/oder die Druckleitung von dem Anschluss 16 entfernt wird. Alternativ oder zusätzlich kann ein Überdruckventil vorgesehen sein, das sich bei einem zu hohen Druck in der Druckzuführung 18 öffnet und so eine Beschädigung des Stopfens 2 verhindert.

Vorzugsweise ist ein Außenradius des zweiten axialen Abschnitts 8 zumindest teilweise geringer als ein Innenradius der Hülse 10, so dass in dem Druckbereich 14 ein freies Arbeitsvolumen gebildet ist. Durch das freie Arbeitsvolumen wird vermieden, dass die Hülse 10 unnötig stark an dem zweiten axialen Abschnitt 8 haftet, beispielsweise aufgrund von Adhäsionskräften. Dies trägt einfach dazu bei, dass sich die Hülse bei einer Druckbeaufschlagung des Druckbereichs 14 bestimmungsgemäß nach außen wölbt.

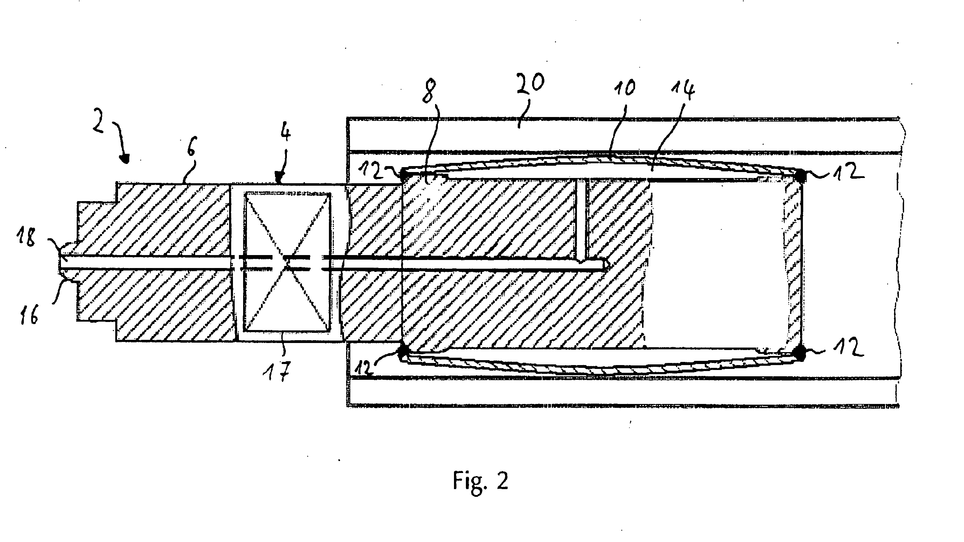

Fig. 2 zeit den Stopfen 2 angeordnet in einem Rohr 20. Der Stopfen 2, insbesondere die Hülse 10 werden bezüglich ihres Außenradius vorzugsweise so passend zu dem Rohr 20 ausgebildet, dass der Stopfen 2 einfach in das Rohr 20 einführbar ist, jedoch nicht so viel Spiel zwischen der Hülse 10 und dem Innenradius des Rohres 20 vorhanden ist, dass kein dichtes Verschließen des Rohres 20 mehr möglich wäre. Beispielsweise kann der Außenradius der Hülse 10 so gewählt werden, dass der Stopfen 2 gerade noch einfach in dem Rohr 20 hin und her bewegbar ist.

Bei bestimmungsgemäßen Einsatz des Stopfens 2 wird der Stopfen 2 an dem Anschluss 16 mit einer Hochdruckleitung verbunden. Die Hochdruckleitung kann neben der Druckbeaufschlagung dazu dienen, den Stopfen 2 beliebig weit in das Rohr 20 einzuführen. Sobald der Stopfen 2 an seinem bestimmungsgemäßen Ort in dem Rohr 20 ist, wird das freie Arbeitsvolumen über die Druckleitung und die Druckzuführung 18 mit Druck beaufschlagt. Der Druck kann dabei beispielsweise bis zu 4.000 bar betragen. Vorzugsweise wird jedoch der Druck in Abhängigkeit von der Größe und dem Material der Hülse 10 so gewählt, dass diese aufgrund des Druckes verformbar ist jedoch nicht beschädigt wird. Ferner wird das Material der Hülse 10 und der Druck so gewählt, dass der Stopfen 2 bei dem später in dem Rohr 20 vorherrschenden Druck das Rohr 20 ausreichend dicht verschließt.

Wird nun der Druckbereich 14 mit dem Druck beaufschlagt, so wölbt sich die Hülse 10 nach außen und wird dadurch mittels einer Presspassung dicht in dem Rohr 20 festgelegt. Zusätzlich kann der Druck so hoch gewählt werden, dass sich durch das Ausweiten der Hülse 10 das Rohr 20 im Bereich der Hülse 10 verformt, so dass zusätzlich zu der Presspassung ein Formschluss zwischen dem Stopfen 2 und dem Rohr 20 erzeugt wird. Bei ausreichend starkem Formschluß und/oder bei ausreichend starker Verformung der Hülse 10 kann auf das Rückschlagventil verzichtet werden, da dann die Verformung der Hülse 10 auch ohne Druck in dem Druckbereich ausreichend groß ist, um den dichten Verschluss zu gewährleisten. Dabei wird der Druck so hoch gewählt, dass sich die Hülse 10 dauerhaft verformt. Hierbei wird das Material der Hülse 10 über seine Fließgrenze Materials hinaus beansprucht, so dass die Hülse nach deren Verformen auch bei Druckentlastung verformt bleibt und so das Rohr 20 dauerhaft verschließt Der verwendete Druck zum Verformen der Hülse 10 wird vorzugsweise abhängig von dem verwendeten Material empirisch ermittelt, beispielsweise an einem geeigneten Prüfstand.

Die Erfindung ist nicht auf die angegebenen Ausführungsbeispiele beschränkt. Beispielsweise kann der zylinderförmige Grundkörper 4 mehr oder weniger axiale Abschnitte 6, 8 aufweisen. Ferner können zwei oder mehr Hülsen 10 je Stopfen 2 vorgesehen sein.

## Patentansprüche

1. Stopfen (2) zum dichten Verschließen eines Rohres (20), der eine verformbare Hülse (10) und einen zylinderförmigen Grundkörper (4) mit einem Anschluss (16) für eine Druckleitung umfasst und bei dem die Hülse (10) so mit dem zylinderförmigen Grundkörper (4) gekoppelt ist, dass die Hülse (10) und der zylihderförmige Grundkörper (4) einen nach außen dichten Druckbereich (14) bilden, der mit dem Anschluss (16) kommuniziert, wobei
die Hülse (10) aus einem dauerhaft verformbaren Material gebildet ist, so dass die Hülse (10) nach deren Verformung oberhalb der Fließgrenze des Materials verformt bleibt und so das Rohr (20) dauerhaft verschließt,
**dadurch gekennzeichnet, dass** die Hülse (10) mit dem zylinderförmigen Grundkörper (4) verschweißt ist.

2. Stopfen (2) nach Anspruch 1,
**dadurch gekennzeichnet, dass**
der Druckbereich (14) über eine Druckzuführung (18) im zylinderförmigen Grundkörper (4) mit dem Anschluss (16) kommuniziert.

3. Stopfen (2) nach Anspruch 2,
**dadurch gekennzeichnet, dass**
in der Druckzuführung (18) ein Ventil (17) angeordnet ist.

4. Stopfen (2) nach einem der vorstehenden Ansprüche,
**dadurch gekennzeichnet, dass**
der Außenradius des zylinderförmigen Grundkörpers (4) in dem Druckbereich (14) zumindest teilweise kleiner ist als der Innenradius der Hülse (10) und bei dem so in dem Druckbereich (14) ein freies Arbeitsvolumen gebildet ist.

5. Stopfen (2) nach einem der vorstehenden Ansprüche,
**dadurch gekennzeichnet, dass**
die Hülse (10) an ihren axialen Enden mit dem zylinderförmigen Grundkörper (4) gekoppelt ist.

6. Stopfen (2) nach einem der vorstehenden Ansprüche,
**dadurch gekennzeichnet, dass**
der zylinderförmige Grundkörper (4) einen ersten axialen Abschnitt (6) aufweist, der den Anschluss (16) umfasst und der in axialer Richtung außerhalb der Hülse (10) liegt, und dass der zylinderförmige Grundkörper (4) einen zweiten axialen Abschnitt (8) aufweist, der in radialer Richtung von der Hülse (10) umgeben ist.

7. Stopfen (2) nach einem der vorstehenden Ansprüche,
**dadurch gekennzeichnet, dass**
eine Wandstärke der Hülse (10) deutlich kleiner ist als der Innenradius der Hülse (10).

8. Verfahren zum Verschließen eines Rohres (20) mit dem Stopfen (2) nach einem der vorstehenden Ansprüche, bei dem der Stopfen (2) in das Rohr (20) eingeführt wird und bei dem der Anschluss (16) des zylinderförmigen Grundkörpers (4) und damit der Druckbereich (14) und/oder das freie Arbeitsvolumen des Stopfens (2) derart mit Druck beaufschlagt wird, dass sich die Hülse (10) in dem Druckbereich (14) derart ausweitet, dass das Material der Hülse (10) über seine Fließgrenze hinaus beansprucht wird und so das Rohr (20) dicht und dauerhaft verschließt.

## Claims

1. A plug (2) for the sealed closing of a pipe (20), which comprises a deformable sleeve (10) and a cylindrical main body (4) having a connection (16) for a pressure pipe, and in which the sleeve (10) is coupled with the cylindrical main body (4) so that the sleeve (10) and the cylindrical main body (4) form an outwardly sealed pressurized area (14), which communicates with the connection (16),
wherein the sleeve (10) is formed from a permanently deformable material, so that the sleeve (10) remains deformed after its deformation above the yield point of the material and thus permanently closes the pipe (20),
**characterized in that** the sleeve (10) is welded to the cylindrical main body (4).

2. Plug (2) according to claim 1,
**characterized in that** the pressurized area (14) communicates with the connection (16) via a pressure feed (18) in the cylindrical main body (4).

3. The plug (2) according to claim 2,
**characterized in that** a valve (17) is arranged in the pressure feed (18).

4. Plug (2) according to one of the preceding claims,
**characterized in that** the external radius of the cylindrical main body (4) in the pressurized area (14) is at least partially less than the internal radius of the sleeve (10), and in which a free working volume is thus formed in the pressurized area (14).

5. Plug (2) according to one of the preceding claims,
**characterized in that** the sleeve (10) is coupled at its axial ends with the cylindrical main body (4).

6. Plug (2) according to one of the preceding claims,
**characterized in that** the cylindrical main body (4) has a first axial section (6), which comprises the connection (16) and which lies outside the sleeve (10) in the axial direction, and that the cylindrical main body (4) has a second axial section (8), which is enclosed by the sleeve (10) in the radial direction.

7. Plug (2) according to one of the preceding claims,
**characterized in that** a wall thickness of the sleeve (10) is significantly less than the internal radius of the sleeve (10).

8. A method for closing a pipe (20) using the plug (2) according to one of the preceding claims, in which the plug (2) is inserted into the pipe (20) and pressure is applied to the connection (16) of the cylindrical main body (4) and thus the pressurized area (14) and/or the free working volume of the plug (2) in such a way that the sleeve (10) expands in the pressurized area (14) so that the material of the sleeve (10) is subjected to a strain beyond its yield point and thus permanently closes and seals the pipe (20).

## Revendications

1. Bouchon (2) pour la fermeture étanche d'un tuyau (20), qui comprend un manchon déformable et un corps de base cylindrique (4) ayant une jonction (16) pour une conduite de pression, et dans lequel le manchon (10) est accouplé au corps de base cylindrique (4) en sorte que le manchon (10) et le corps de base cylindrique (4) forment une zone de pression (14) étanche vers l'extérieur, qui communique avec la jonction (16),
dans lequel le manchon (10) est formé d'un matériau durablement déformable en sorte que le manchon (10) reste déformé après sa déformation au-dessus de la limite d'élasticité du matériau et ainsi ferme le tuyau (20) durablement,
**caractérisé en ce que** le manchon (10) est soudé au corps de base cylindrique (4).

2. Bouchon (2) selon la revendication 1,
**caractérisé en ce que** la zone de pression (14) communique avec la jonction (16) via une conduite d'amenée de pression (18) dans le corps de base cylindrique (4).

3. Bouchon (2) selon la revendication 2,
**caractérisé en ce qu'**une vanne (17) est aménagée dans la conduite d'amenée de pression (18).

4. Bouchon (2) selon l'une des revendications précédentes,
**caractérisé en ce que** le rayon extérieur du corps de base cylindrique (4) dans la zone de pression (14) est au moins partiellement plus petit que le rayon intérieur du manchon (10), et dans lequel un volume de travail libre est formé ainsi dans la zone de pression (14).

5. Bouchon (2) selon l'une des revendications précédentes,
**caractérisé en ce que** le manchon (10) est accouplé à ses bouts axiaux au corps de base cylindrique (4).

6. Bouchon (2) selon l'une des revendications précédentes,
**caractérisé en ce que** le corps de base cylindrique (4) a une première partie axiale (6), laquelle comprend la jonction (16) et laquelle est située en dehors du manchon (10) dans la direction axiale, et **en ce que** le corps de base cylindrique (4) a une seconde partie axiale (8), laquelle est entourée par le manchon (10) dans la direction radiale.

7. Bouchon (2) selon l'une des revendications précédentes,
**caractérisé en ce que** une épaisseur de paroi du manchon (10) est nettement plus petite que le rayon intérieur du manchon (10).

8. Une méthode pour la fermeture d'un tuyau (20) avec le bouchon (2) selon l'une des revendications précédentes, dans laquelle le bouchon (2) est introduit dans le tuyau (20) et dans laquelle de la pression est appliquée sur la jonction (16) du corps de base cylindrique (4) et ainsi sur la zone de pression (14) et/ou le volume de travail libre du bouchon (2) en sorte que le manchon (10) s'étend dans la zone de pression (14) en sorte que le matériau du manchon (10) est sollicité au-delà de sa limite d'élasticité et ainsi ferme le tuyau (20) de façon étanche et durable.
